Europäisches Patentamt

European Patent Office

Office européen des brevets

(19)

(11) Veröffentlichungsnummer: **0 223 063 B1**

# EUROPÄISCHE PATENTSCHRIFT

(45) Veröffentlichungstag der Patentschrift: **08.05.91**

(51) Int. Cl.⁵: **C08F 220/04**, C08F 2/10

(21) Anmeldenummer: **86114234.7**

(22) Anmeldetag: **15.10.86**

(54) Verfahren zur kontinuierlichen Herstellung von vernetzten feinteiligen gelförmigen Polymerisaten.

(30) Priorität: **19.10.85 DE 3537276**

(43) Veröffentlichungstag der Anmeldung:
**27.05.87 Patentblatt 87/22**

(45) Bekanntmachung des Hinweises auf die
Patenterteilung:
**08.05.91 Patentblatt 91/19**

(84) Benannte Vertragsstaaten:
**AT BE CH DE FR GB IT LI NL SE**

(56) Entgegenhaltungen:
**DE-A- 3 432 690**
**US-A- 4 110 521**

(73) Patentinhaber: **BASF Aktiengesellschaft**
**Carl-Bosch-Strasse 38**
**W-6700 Ludwigshafen(DE)**

(72) Erfinder: **Nowakowsky, Bernhard Henryk, Dr.**
**Schuckertstr. 10**
**W-6700 Ludwigshafen(DE)**
Erfinder: **Beck, Jürgen**
**Siegfriedstr. 31**
**W-6800 Mannheim 24(DE)**
Erfinder: **Hartmann, Heinrich, Dr.**
**Weinheimer Str. 46**
**W-6703 Limburgerhof(DE)**
Erfinder: **Vamvakaris, Christos, Dr.**
**Riedweg 6**
**W-6701 Kallstadt(DE)**

## Beschreibung

Aus der DE-OS 34 32 690 ist ein Verfahren zur kontinuierlichen Herstellung von vernetzten Polymerisaten bekannt, bei dem man wasserlösliche Monomere in Gegenwart eines Vernetzers und von Initiatoren in einem Kessel polymerisiert, der mit einer Mehrzahl von parallel zueinander angeordneten rotierenden Rührerwellen ausgerüstet ist, die mit Rührerblättern versehen sind. Die Polymerisation wird kontinuierlich in einem Zweiarm-Typkneter oder beispielsweise in einem Dreischaftkneter durchgeführt. Die Polymerisationstemperatur liegt vorzugsweise in dem Bereich von 70 bis 100° C. Bei diesem Reaktortyp findet eine starke Rückvermischung statt, so daß die Monomerlösung auf das fein zerteilte wasserhaltige Gelpolymere gegeben wird und die Polymerisation des Monomeren auf der Oberfläche des Polymergels abläuft. Die so herstellbaren feinteiligen Polymerisatgele haben einen relativ hohen Restmonomergehalt und erhebliche Mengen an extrahierbaren, d.h. löslichen Anteilen. Sie müssen in einem gesonderten Verfahrensschritt einer Nachpolymerisation und Nachvernetzung unterworfen werden.

Der Erfindung liegt die Aufgabe zugrunde, ein kontinuierliches Verfahren zur Herstellung von vernetzten, feinteiligen, gelförmigen Polymerisaten zur Verfügung zu stellen, bei dem Polymerisate mit einem geringeren Restmonomerengehalt sowie geringen Mengen an extrahierbaren Anteilen anfallen.

Die Aufgabe wird erfindungsgemäß gelöst mit einem Verfahren zur kontinuierlichen Herstellung von vernetzten, feinteiligen, gelförmigen Polymerisaten durch Copolymerisieren von Monomerenmischungen, die pro 100 Gew.-Teile mindestens eines Monomeren der Gruppe

a) einer zu jeweils 50 bis 100 Mol.% mit Alkalimetall- oder Ammoniumbasen neutralisierten Acrylsäure oder Methacrylsäure, Acrylamid, Methacrylamid und N-Vinylpyrrolidon,
b) 0 bis 30 Gew.-Teile andere wasserlösliche monoethylenisch ungesättigte Monomere,
c) 0 bis 20 Gew.-Teile wasserunlösliche monoethylenisch ungesättigte Monomere und
d) 0,01 bis 5 Gew.-Teile eines mindestens zwei ethylenisch ungesättigte Doppelbindungen enthaltenden Monomeren als Vernetzer enthalten, in 20 bis 65 gew.%iger wäßriger Lösung in Gegenwart von Initiatoren bei Temperaturen von 45 bis 95° C, wenn man die wäßrige Lösung der Monomeren zusammen mit den Initiatoren kontinuierlich einem einwelligen zylindrischen Mischer zuführt, an dessen Rührwelle Scheibensegmente angeordnet sind, die am äußeren Ende Mischelemente in einer solchen Anordnung aufweisen, daß dadurch eine Förderung der am Anfang des Mischers zugegebenen Stoffe in axialer Richtung zum Ende des Mischers bewirkt wird, die wäßrige Monomerlösung im Mischer unter einem Druck von 100 bis 800 mbar polymerisiert, während der Polymerisation einen Teil des Wassers entfernt, so daß am Ende des Mischers krümelige Gelteilchen mit einem Feststoffgehalt von 30 bis 70 Gew.% ausgetragen werden.

Als Monomere der Gruppe (a) kommen Acrylsäure und/oder Methacrylsäure in Betracht, die jeweils zu 50 bis 100 Mol.% mit Alkalimetall- oder Ammoniumbasen neutralisiert sind, Acrylamid, Methacrylamid und N-Vinylpyrrolidon. Für die partielle bzw. vollständige Neutralisation der Acrylsäure bzw. Methacrylsäure verwendet man vorzugsweise Natronlauge oder Kalilauge. Die Neutralisation kann selbstverständlich auch mit Hilfe von Soda oder Pottasche sowie mit Ammoniak, oder substituierten Aminen wie Trimethylamin, Tri-n-Octylamin und Triethanolamin vorgenommen werden. Die Monomeren der Gruppe (a) können entweder allein oder in Mischung untereinander in jedem beliebigen Verhältnis bei der Copolymerisation eingesetzt werden. So kann man beispielsweise Monomerenmischungen aus Acrylsäure und Methacrylsäure, aus Acrylsäure und Acrylamid, aus Acrylsäure, Acrylamid und Methacrylamid oder aus Acrylamid und N-Vinylpyrrolidon der Copolymerisation unterwerfen. Vorzugsweise verwendet man jedoch als Monomer der Gruppe (a) zu 50 bis 100 Mol.% mit Natronlauge oder Kalilauge neutralisierte Acrylsäure.

Die Monomeren der Gruppe (b) bestehen aus anderen wasserlöslichen monoethylenisch ungesättigten Monomeren. Hierzu gehören beispielsweise Maleinsäure, Fumarsäure, Crotonsäure, Itakonsäure, Vinylsulfonsäure, Vinylpyridiniumsalze, N-Vinylformamid, basische Acrylate oder Methacrylate in Form der Salze mit starken Mineralsäuren oder in quaternisierter Form, z.B. Dimethylaminoethylacrylat, Diethylaminoethylacrylat, Dimethylaminopropylacrylat, Dimethylaminobutylacrylat, Diethylaminoethylmethacrylat, Dimethylaminoethylmethacrylat und Dimethylaminopropylacrylat. Zu dieser Gruppe von Monomeren gehören auch die Hydroxialkylacrylate und Hydroximethacrylate, z.B. Hydroxiethylacrylat, Hydroxiethylmethacrylat, Hydroxipropylacrylate, Hydroxipropylmethacrylate, Hydroxibutylacrylate, Hydroxibutylmethacrylate sowie Acrylsäureester und Methacrylsäureester, die durch Veresterung von Polyethylenglykolen mit Acrylsäure bzw. Methacrylsäure im Molverhältnis 1:1 erhalten werden. Pro 100 Gew.-Teile der Monomeren der Gruppe (a) verwendet man 0 bis 30 Gew.-Teile der Monomeren der Gruppe (b).

Zu den Monomeren der Gruppe (c) gehören wasserunlösliche monoethylenisch ungesättigte Monomere. Hierbei handelt es sich beispielsweise um die Ester der Acrylsäure oder Methacrylsäure mit einwertigen, 1 bis 18 Kohlenstoffatome enthaltenden Alkoholen, z.B. Methylacrylat, Ethylacrylat, Propylacrylat, Isopropylacrylat, Butylacrylat, Hexylacrylat, 2-Ethylhexylacrylat, Stearylacrylat, die entsprechenden Ester der Methacrylsäure, Fumarsäurediethylester, Acrylnitril und Methacrylnitril, Vinylaceton und Vinylpropionat. Pro 100 Gew.-Teile der Monomeren der Gruppe (a) setzt man bei der Copolymerisation 0 bis 20 Gew.-Teile der Monomeren der Gruppe (c) ein.

Zu den Monomeren der Gruppe (d) gehören Vernetzer, die mindestens zwei ethylenisch ungesättigte Doppelbindungen enthalten, z.B. N,N'-Methylenbisacrylamid, Polyethylenglykoldiacrylate und Polyethylenglykoldimethacrylate, die sich jeweils von Polyethylenglykolen eines Molekulargewichts von 126 bis 8500 ableiten, Trimethylolpropantriacrylat, Trimethylolpropantrimethacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acylsäure oder Methacrylsäure veresterte Anlagerungsprodukte von Ethylenoxid und/oder Propylenoxid an Trimethylolpropan, mindestens zweifach mit Acrylsäure oder Methacrylsäure verestertes Glycerin oder Pentaerythrit, Triallylamin, Tetraallylethylendiamin, Divinylbenzol, Diallylphthalat, Polyethylenglykoldivinylether, Trimethylolpropandiallylether und Divinylethylenharnstoff. Die Monomeren der Gruppe (d) werden - bezogen auf 100 Gew.-Teile der Monomeren der Gruppe (a) - in einer Menge von 0,01 bis 5 Gew.-Teilen bei der Copolymerisation verwendet. Die Vernetzer werden vorzugsweise in einer Menge von 0,1 bis 3 Gew.-Teilen pro 100 Gew.-Teile der Monomeren (a) eingesetzt werden.

Die Monomeren werden in wäßriger Lösung polymerisiert. Die wasserunlöslichen Monomeren können, falls sie bei der Copolymerisation miteingesetzt werden, mit Hilfe von Emulgatoren in der wäßrigen Lösung fein verteilt werden. Geeignete Emulgatoren sind beispielsweise ethoxylierte Nonylphenole, ethoxyliertes Ricinusöl, Alkylsulfate, Sorbitanfettsäureester, ethoxylierte Sorbite, ethoxylierte Sorbitanfettsäureester und Alkylsulfonate.

Die Emulgatoren werden in einer Menge von 0 bis 3 Gew.-Teilen pro 100 Gew.-Teile des Monomeren der Gruppe (a) eingesetzt. Die Konzentration der wäßrigen Monomerlösung liegt vorzugsweise in dem Bereich von 30 bis 50 Gew.%.

Als Initiatoren eignen sich hauptsächlich wasserlösliche Radikale bildende Verbindungen, z.B. Azostarter wie 2,2'-Azobis-(N,N'-dimethylenisobutyramidin)-dihydrochlorid, 2,2'-Azobis-(2-Amidinopropan)-dihydrochlorid, 2,2'-Azobis-(N,N'-dimethylenisobutyramidin), 4,4'-Azobis-(4-cyanopentancarbonsäure), 2-Carbamoylazo-isobutyronitril sowie Dibenzoylperoxid, Dilaurylperoxid, Di-2-ethylhexylperoxidicarbonat, Dicyclohexyl-peroxidicarbonat, Bis-(4-tert.-butylhcyclohexyl)-peroxidicarbonat, tert.-Butylperpivalat, tert.-Butylperbenzoat, tert.-Butylpermaleinat, Di-tert.-butylperoxid, tert.-Butylhydroperoxid, Wasserstoffperoxid, Ammoniumpersulfat, Kaliumpersulfat, Natriumpersulfat sowie Redoxkatalysatoren, wobei als reduzierende Komponente Eisen(II)-ammoniumsulfat, Ascorbinsäure, Natriummethylsulfinat, Dinatriumdisulfitund Natriumhydrogensulfit in Betracht kommen. Die Initiatoren können entweder allein oder in Mischung angewendet werden. Die Zerfallsgeschwindigkeit der sehr hoch zerfallenden Peroxide kann durch Mitverwendung von organischen Metallkomplexverbindungen, z.B. Kupferacetylacetonat, erniedrigt werden, so daß die Zerfallsgeschwindigkeit der Peroxide der jeweils gewählten Polymerisationstemperatur angepaßt werden kann. Vorzugsweise verwendet man Redoxkatalysatoren aus einem oder mehreren Peroxiden und einem Reduktionsmittel. Besonders bevorzugt ist der Einsatz von Persulfaten oder Perestern oder Mischungen aus Persulfaten und Perestern als ein Bestandteil von Redox-Polymerisationsinitiatoren. Die Polymerisationsinitiatoren werden in einer Menge von 0,01 bis 5, vorzugsweise 0,2 bis 3 Gew.%, bezogen auf die bei der Polymerisation eingesetzten Monomeren angewendet.

Um das Molekulargewicht der Polymerisate zu regeln, kann man auch in Gegenwart eines Polymerisationsreglers polymerisieren, z.B. von Mercaptoethanol, Mercaptopropanol, Thioglykolsäure, Dodecylmercaptan, Ameisensäure oder halogenierten Kohlenwasserstoffen wie Brommethan oder Tetrachlorkohlenstoff. Die Polymerisationsregler werden in einer Menge von 0 bis 3 Gew.%, bezogen auf die an der Polymerisation eingesetzten Monomeren, verwendet.

Die wäßrige Monomerenlösung wird zusammen mit dem Initiator bzw. mehreren Initiatoren kontinuierlich einem einwelligen zylindrischen Mischer zugeführt, an dessen Rührwelle Scheibensegmente angeordnet sind, die am äußeren Ende Mischbarren in einer solchen Anordnung aufweisen, daß dadurch eine Förderung der am Anfang des Mischers zugegebenen Stoffe in axialer Richtung zum Ende des Mischers bewirkt wird, wo gegebenenfalls eine Stauscheibe angeordnet ist. Die Stauscheibe dient zur Regulierung des Füllgrades des Mischers. Bei Erreichen eines bestimmten Füllungsgrades des Mischers gelangt das rieselfähige, nicht klebende feinteilige Gel über die Stauscheibe zur Austragsöffnung, die seitlich oder am Boden des zur Einfüllöffnung entgegengesetzten Endes des Mischers angeordnet ist. Das feinteilige Gel kann durch freien Fall oder durch an der Rührwelle befestigte Austragshilfen aus dem Mischer ausgetragen werden. Bevorzugt wird ein Mischer, der keine Stauscheibe enthält und bei dem der Austrag nach unten durch freien Fall erfolgt.

Die wäßrige Monomerlösung kann den Initiator gelöst oder dispergiert enthalten. Die Initiatoren können jedoch auch getrennt von der Monomerlösung dem einwelligen zylindrischen Mischer zugeführt werden. Der Mischer kann nach Bedarf beheizt und gekühlt werden. Die Monomerlösung wird darin bei einer Temperatur in dem Bereich von 45 bis 95°C und unter einem Druck von 100 bis 800 mbar (absolut) polymerisiert. Unter diesen Bedingungen verdampft im Mischer ein Teil des Wassers, das über die Druckhaltevorrichtungen aus dem Mischer entfernt wird. Während an der Zugabestelle der Monomeren in den Mischer die Stoffe in flüssiger Form vorliegen geht die Konsistenz der Reaktionsmischung über einen hochviskosen Zustand in ein krümeliges Gel über, das durch die kontinuierliche Förderwirkung des Mischers am Ende des Mischers ausgetragen wird. Die Polymerisationswärme wird durch Verdampfung eines Teils des Wassers der wäßrigen Monomerlösung aus dem System entfernt. Es ist bei dem erfindungsgemäßen Verfahren sehr leicht möglich, die Polymerisationstemperatur mit Hilfe der Einstellung des Drucks zu kontrollieren. Bei der Polymerisation entsteht ein Gel, das im Mischer zu einem feinteiligen krümeligen Gel zerteilt und als solches dann ausgetragen wird. Wichtig ist dabei, daß während der Polymerisation im Mischer nur ein Teil des Wasser entfernt wird, so daß am Ende des einwelligen Mischers krümelige Gelteilchen mit einem Feststoffgehalt von 30 bis 70 Gew.% anfallen. Bei höheren Feststoffgehalten des Gels kompaktieren die feinteiligen Gelteilchen zu schwer-förderbaren Klumpen, deren Zerkleinerung einen hohen Energieaufwand erfordern würde. Die Verweilzeit des Reaktionsgemisches im einwelligen Mischer beträgt 5 bis 60, vorzugsweise 10 bis 20 Minuten.

Der einwellige zylindrische Mischer hat ein Verhältnis von Länge zu Durchmesser von 3:1 bis 20:1. Auf der Rührwelle sind die Scheibensegmente propellerartig angeordnet. Auf die gesamte Länge der Rührwelle verteilt befinden sich 2 bis 25 dieser Scheibensegmente, wobei ein Scheibensegment aus 2 bis 7 Einzelelementen besteht, die propellerartig angeordnet sind. Die Mischelemente, die sich am äußeren Ende der Scheibensegmente befinden, bewirken die Förderung der im Stadium der Polymerisation befindlichen Mischung innerhalb des Mischgeräts und verhindern gleichzeitig, daß sich Polymergel an der Innenwand des Mischers ablagert, weil die Mischelemente in der Nähe der inneren Wandung des zylinderförmigen Mischers vorbeilaufen. Als Mischelemente sind z.B. wandgängige Mischbarren oder pflugscharartig ausgeformte Aufsätze geeignet. In dem Mischer befinden sich außerdem noch eingebaute Gegenhaken mit Flansch um das bei der Polymerisation entstehende Gel von den Scheibensegmenten der Rührwelle und den Mischbarren zu entfernen.

Das bei der Polymerisation im einwelligen Mischer anfallende krümelige Gel wird danach getrocknet. Der Trocknungsschritt kann nach allen bekannten Verfahrensweisen erfolgen, z.B. in einer Wirbelschicht, auf einem Umlufttrocknungsband, Vakuumtrocknungsband oder mit Hilfe einer Mikrowellentrocknung, oder bevorzugt unter vermindertem Druck in einem einwelligen Kneter unter intensivem Durchkneten des Polymergels. Dieser Trocknungsschritt wird vorzugsweise in einem ein- der mehrwelligen Kneter bei einem Druck von 5 bis 300, vorzugsweise 20 bis 70 mbar und Temperaturen von 30 bis 170°C durchgeführt. Nach dem Trocknen erhält man ein rieselfähiges Polymergel, das eine sehr hohe Wasseraufnahme hat und als Bodenverbesserungsmittel bzw. als Absorptionsmittel in Hygieneartikeln, z.B. Windeln Verwendung finden kann. Die in den Beispielen angegebenen Teile sind Gewichtsteile, die Angaben in Prozent beziehen sich auf das Gewicht der Stoffe.

Bestimmung des Absorptionsvermögens:
In den Beispielen wurde jeweils das Absorptionsvermögen des hergestellten Gels für physiologisches Kochsalz angegeben. Es wurde dadurch ermittelt, daß man 0,2 g des Polymeren in einem teebeutelartig geformten Filterpapiertütchen einschloß und 10 Minuten lang in eine 0,9 %ige wäßrige Kochsalzlösung eintauchte. Nach Substraktion der Sorption des leeren Tütchens errechnete man jeweils die Aufnahmefähigkeit des Polymeren.

Bestimmung der löslichen Anteile:
Der Gehalt der nicht in das Netzwerk der Polymeren eingebundenen löslichen Anteile wurde durch 8stündige Quellung des Polymeren in Wasser und Messung des Kohlenstoffgehalts der wäßrigen Lösung bestimmt.

Beispiel 1

Man stellte zunächst eine als Zulauf 1 bezeichnete Monomerlösung her, die auf 1000 Teile wäßriger Lösung 392 Teile Acrylsäure und Natriumacrylat im Molverhältnis 1:3 sowie 4 Teile N,N'-Methylen-bisacrylamid und 4 Teile Ammoniumpersulfat enthielt. Als Zulauf 2 wurde eine Lösung von 3 Teilen Natriumbisulfit in 1000 Teilen Wasser verwendet. Man pumpte gleichzeitig Zulauf 1 mit einem Durchsatz von 10.000 Teilen pro Stunde und Zulauf 2 in einer Menge von 150 Teilen je Stunde in einen 6 Liter fassenden einwelligen zylindrischen Mischer, an dessen Rührwelle Scheibensegmente angeordnet waren, die am äußeren Ende Mischbarren in einer solchen Anordnung aufwiesen, daß dadurch eine Förderung der am Anfang des Mischers zugegebenen Monomerlösung in axialer Richtung zum Ende des Mischers bewirkt wurde. Das Verhältnis von Länge zu Durchmesser betrug bei dem Mischer 7:1. Auf der Rührwelle waren jeweils 8 Scheibensegmente in einem Abstand von 15 cm angeordnet, wobei ein Scheibensegment aus drei Einzelelementen bestand.

Die Rührwelle und das Gehäuse des einwelligen Mischers wurden auf 45°C erhitzt und im Inneren des Mischers ein Druck von 500 mbar eingestellt. Die im Mischer befindliche polymerisierende Mischung hatte eine maximale Temperatur von 84°C. Aus dieser Mischung wurde während der Polymerisation laufend Wasser abdestilliert, so daß am Ende des einwelligen Mischers ein krümeliges Polymerisat mit einem Feststoffgehalt von 46 % erhalten wurde. Die mittlere Verweilzeit im Mischer betrug 20 Minuten.

Das erhaltene krümelige Gel wurde anschließend in einem Kneter bei einer Temperatur von 80°C und einem Druck von 60 mbar auf einen Feststoffgehalt von 97,8 % getrocknet.

Ein Gramm des so erhaltenen Polymerisats nahm 52 g physiologische Kochsalzlösung auf.

Durch Quellung in Wasser ließen sich 6 % lösliche Anteile extrahieren.

Beispiel 2

Man bereitete einen Zulauf 1, der auf 1000 Teile wäßriger Lösung 250 Teile Acrylsäure und Natriumacrylat im Molverhältnis 1:3, 746 Teile Wasser, 2 Teile N,N'-Methylen-bisacrylamid und 2 Teile Ammoniumpersulfat enthielt sowie einen Zulauf 2, der aus einer Lösung von 3 Teilen Natriumhydrogensulfit in 1000 Teilen Wasser bestand. Stündlich wurden jeweils 10.000 Teile des Zulaufs 1 und 50 Teile des Zulaufs 2 in den in Beispiel 1 beschriebenen einwelligen zylindrischen Mischer gepumpt. Der Mischer wurde auf eine Temperatur von 60°C erwärmt. Die Polymerisation wurde bei einem Druck von 200 mbar und einer max. Temperatur von 63°C durchgeführt. Die mittlere Verweilzeit betrug 40 Minuten. Man erhielt ein feinteiliges krümeliges Gel mit einem Feststoffgehalt von 28 %. Das wasserhaltige Polymere trocknete man in einem Kneter bei 170°C unter einem Druck von 150 mbar bis auf einen Restmonomergehalt von 0,4 %. 11 % lösliche Anteile konnten nach Quellung in Wasser abgetrennt werden. Ein Gramm des Polymeren nahm 46 g physiologische Kochsalzlösung auf.

Beispiel 3

Man bereitete einen Zulauf 1, der auf 1000 Teile wäßriger Lösung, 425 Teile Acrylsäure und Natriumacrylat im Molverhältnis 1:3, 570 Teile Wasser, 2 Teile Polyethylenoxiddiacrylat vom Molekulargewicht 750, 2,5 Teile Ammoniumpersulfat und 0,5 Teile tert.-Butylperbenzoat enthielt. Als Zulauf 2 wurde eine Lösung von 3 Teilen Natriummethylsulfinat in 1000 Teilen Wasser verwendet. Zulauf 1 wurde in einer Menge von 10.000 Teilen pro Stunde und gleichzeitig damit der Zulauf 2 in einer Menge von 50 Teilen pro Stunde dem in Beispiel 1 beschriebenen einwelligen Mischer, der auf eine Temperatur von 50°C erhitzt war, zugeführt. Bei einem Druck von 200 mbar betrug die maximale Polymerisationstemperatur 59°C. Die mittlere Verweilzeit im einwelligen Mischer betrug 25 Minuten. Am Ende des Mischers wurde ein krümeliges Gel ausgetragen, das einen Feststoffgehalt von 47 % hatte. Getrocknet wurde in einem Kneter bei einer Temperatur von 80°C unter einem Druck von 10 mbar bis auf einen Restwassergehalt von 1,1 %. Der Gehalt an löslichen Anteilen wurde nach Quellung in Wasser zu 7 % bestimmt. 1 g des so hergestellten Copolymerisats nahm 54 g physiologische Kochsalzlösung auf.

Beispiel 4

Man bereitete einen Zulauf 1, der auf 1000 Teile wäßriger Lösung, 495 Teile Acrylsäure und Kaliumacrylat und Acrylamid im Molverhältnis 1:3:1, 500 Teile Wasser, 2 Teile Trimethylolpropantriacrylat, 2 Teile Natriumpersulfat, ein Teil tert.-Butylpermaleinat enthielt sowie einen Zulauf 2 aus 5 Teilen Ascorbinsäure in 1000 Teilen Wasser. Zulauf 1 wurde in einer Menge von 10.000 Teilen pro Stunde zusammen mit dem Zulauf 2 in einer Menge von 50 Teilen pro Stunde dem in Beispiel 1 beschriebenen einwelligen Mischer zugeführt. Die Temperatur des Mischers wurde auf 50°C eingestellt. Die Polymerisation der Monomerenlösung erfolgte im Mischer unter einem Druck von 700 mbar bei einer max. Temperatur von 95°C. Die Verweilzeit des Reaktionsgemisches betrug 12 Minuten. Am Ende des einwelligen Mischers wurde ein feinteiliges, krümeliges Gel mit einem Feststoffgehalt von 54 % ausgetragen. Nach Trocknung bei 60°C unter einem Druck von 30 mbar wurde ein Produkt mit 97,5 % Feststoffgehalt erhalten. 1 g des so hergestellten Polymergels nahm 56 g physiologische Kochsalzlösung auf. 4 % lösliche Anteile konnten nach Quellung in Wasser nachgewiesen werden.

Vergleichsbeispiel

Unter einer Stickstoffatmosphäre wurde eine Monomerenlösung, die auf 1000 Teile wäßriger Lösung 396 Teile Acrylsäure und Natriumacrylat im Molverhältnis 1:3 sowie 4 Teile N,N'-Methylen-bis-acrylamid enthielt in einem 4 Liter fassenden Kneter aus V2A-Stahl mit parallel angeordneten Knetelementen (in Doppel-Fischschwanz-Form) durch Beheizen des Kneters auf 45 °C erwärmt. Bei dieser Temperatur gab man dann 4 Teile Ammoniumpersulfat zu und homogenisierte die Mischung. Die Polymerisation wurde durch das Zufügen von 0,4 Teilen Natriumhydrogensulfit in 4,6 Teile Wasser gestartet. Nach dem Durchlaufen einer viskosen Phase erhielt man ein gelartiges Polymerisat, das durch die Scherwirkung der Rührblätter des Kneters zu feinen Partikeln verteilt wurde. Die max. Polymerisationstemperatur lag bei 93 °C. Das so hergestellte Polymergel hatte nach Trocknung bei 180 °C in einem Umlufttrockenschrank ein Absorptionsvermögen von 51 g physiologischer Kochsalzlösung pro Gramm Polymer. Es enthielt 41 % durch Quellung in Wasser extrahierbare lösliche Anteile.

## Ansprüche

1. Verfahren zur kontinuierlichen Herstellung von vernetzten, feinteiligen, gelförmigen Polymerisaten durch Copolymerisieren von Monomerenmischungen, die pro 100 Gew.-Teile mindestens eines Monomeren der Gruppe

   a) einer zu jeweils 50 bis 100 Mol.% mit Alkalimetall- oder Ammoniumbasen neutralisierten Acrylsäure oder Methacrylsäure, Acrylamid, Methacrylamid und N-Vinylpyrrolidon,

   b) 0 bis 30 Gew.-Teile andere wasserlösliche monoethylenisch ungesättigte Monomere,

   c) 0 bis 20 Gew.-Teile wasserunlösliche monoethylenisch ungesättigte Monomere und

   d) 0,01 bis 5 Gew.-Teile eines mindestens zwei ethylenisch ungesättigte Doppelbindungen enthaltenden Monomeren als Vernetzer enthalten,

   in 20 bis 65 gew.%iger wäßriger Lösung in Gegenwart von Initiatoren bei Temperaturen von 45 bis 95 °C, dadurch gekennzeichnet, daß man die wäßrige Lösung der Monomeren zusammen mit den Initiatoren kontinuierlich einem einwelligen zylindrischen Mischer zuführt, an dessen Rührwelle Scheibensegmente angeordnet sind, die am äußeren Ende Mischelemente in einer solchen Anordnung aufweisen, daß dadurch eine Förderung der am Anfang des Mischers zugegebenen Stoffe in axialer Richtung zum Ende des Mischers bewirkt wird, die wäßrige Monomerlösung im Mischer unter einem Druck von 100 bis 800 mbar polymerisiert, während der Polymerisation einen Teil des Wassers entfernt, so daß am Ende des Mischers krümelige Gelteilchen mit einem Feststoffgehalt von 30 bis 70 Gew.% ausgetragen werden.

2. Verfahren nach Anspruch 1, dadurch gekennzeichnet, daß man Acrylsäure, die zu 50 bis 100 Mol.% mit Natronlauge und/oder Kalilauge neutralisiert ist, mit einem mindestens zwei ethylenisch ungesättigte Doppelbindungen enthaltenden Monomeren kontinuierlich copolymerisiert.

3. Verfahren nach den Ansprüchen 1 und 2, dadurch gekennzeichnet, daß die Verweilzeit der Reaktionsmischung im Mischer 5 bis 60 Minuten beträgt.

4. Verfahren nach den Ansprüchen 1 und 2, dadurch gekennzeichnet, daß man als Vernetzer N,N'-Methylen-bis-acrylamid, Polyethylenglykoldiacrylate, Trimethylolpropantriacrylat und/oder Butandioldiacrylat einsetzt.

## Claims

1. A process for the continuous preparation of a finely divided, gel-like crosslinked polymer by copolymerization of a monomer mixture which contains, per 100 parts by weight of one or more monomers of the group consisting of

   a) acrylic acid and methacrylic acid, from 50 to 100 mol% of which in each case is neutralized with an alkali metal or ammonium base, and acrylamide, methacrylamide and N-vinylpyrrolidone,

   b) from 0 to 30 parts by weight of other water-soluble monoethylenically unsaturated monomers,

   c) from 0 to 20 parts by weight of water-insoluble monoethylenically unsaturated monomers and

   d) from 0.01 to 5 parts by weight of a monomer containing two or more ethylenically unsaturated double bonds as a crosslinking agent,

   in 20 - 65% strength by weight aqueous solution in the presence of an initiator at from 45 to 95 °C, wherein the aqueous solution of the monomers together with the initiator is fed continuously to a single-screw cylindrical mixer whose stirrer shaft possesses disk segments which have, at the outer end, mixing elements which are arranged in a manner such that the substances introduced at the entrance of the mixer are conveyed in the axial direction to the exit of the mixer, the aqueous monomer solution is polymerized in the mixer under from 100 to 800 mbar, and some of the water is removed during the polymerization, so that crumb-like gel particles having a solids content of from 30 to 70% by weight are discharged at the exit of the mixer.

2. A process as claimed in claim 1, wherein acrylic acid which has been neutralized to a degree of from 50 to 100 mol% with sodium hydroxide solution and/or potassium hydroxide solution is continuously copolymerized with a monomer which contains two or more ethylenically unsaturated double bonds.

3. A process as claimed in claim 1 or 2, wherein the residence time of the reaction mixture in the mixer is from 5 to 60 minutes.

4. A process as claimed in claim 1 or 2, wherein N,N'-methylenebisacrylamide, polyethylene glycol diacrylates, trimethylolpropane triacrylate and/or butanediol diacrylate are used as crosslinking agents.

**Revendications**

1. Procédé de fabrication continue de polymères en forme de gel ou géliformes, finement divisés, réticulés, par la copolymérisation de mélanges de monomères qui, par 100 parties en poids, contiennent au moins un monomère appartenant au groupe formé par
    a) un acide méthacrylique ou d'un acide acrylique, chaque fois neutralisé à raison de jusqu'à 50 à 100% molaires avec une base de métal alcalin ou d'ammonium, l'acrylamide, le méthacrylamide et la N-vinylpyrrolidone
    b) 0 à 30 parties en poids d'autres monomères à insaturation monoéthylénique, solubles dans l'eau,
    c) 0 à 20 parties en poids de monomères à insaturation monoéthylénique, insolubles dans l'eau et
    d) 0,01 à 5 parties en poids d'un monomère contenant au moins deux doubles liaisons à insaturation éthylénique, à titre d'agent de réticulation,
    en solution aqueuse à 20 à 65% en poids, en présence d'amorceurs, à des températures de 45 à 95° C, caractérisé en ce que l'on introduit continuellement la solution aqueuse des monomères, en même temps que les amorceurs, dans un malaxeur cylindrique à un arbre, sur l'arbre d'agitation duquel sont montés des segments de disques, qui présentent, a l'extrémité extérieure, des éléments de mélange en un agencement tel que l'on parvienne, de ce fait, à une progression des substances introduites à l'entrée du mélangeur en direction axiale vers la fin du mélangeur, on polymérise la solution aqueuse des monomères dans le mélangeur, sous une pression de 100 à 800 mbars, on élimine une partie de l'eau au cours de la polymérisation, en manière telle qu'à l'extrémité du mélangeur sortent des particules de gel grumeleuses d'une teneur en corps solides de 30 à 70% en poids.

2. Procédé selon la revendication 1, caractérisé en ce que l'on copolymérise en continu de l'acide acrylique neutralisé à raison de jusqu'à 50 à 100% molaires par une lessive sodique et/ou une lessive potassique, avec un monomère contenant au moins deux doubles liaisons à insaturation éthylénique.

3. Procédé selon les revendications 1 et 2, caractérisé en ce que la durée de séjour du mélange de réaction dans le mélangeur varie de 5 à 60 minutes.

4. Procédé selon les revendications 1 et 2, caractérisé en ce que l'on utilise du N,N'-méthylènebisacrylamide, des diacrylates de polyéthylèneglycol, du triacrylate de triméthylolpropane et/ou du diacrylate de butanediol, à titre d'agents de réticulation.